# EUROPEAN PATENT APPLICATION

(11) **EP 4 664 218 A1**
(43) Date of publication of application: **17.12.2025**
(21) Application number: 24852244.3
(22) Date of filing: 05.08.2024
(51) Int. Cl.: G05B 19/418, G06Q 50/04, G05B 23/02, H01M 4/04, H01M 10/04

(54) **METHOD FOR DISPLAYING INTERMEDIATE ROLL MAP**

(30) Priority: 07.08.2023 KR 20230103079
(71) Applicant: LG Energy Solution, Ltd., Seoul 07335 (KR)
(72) Inventor: HA, Hyun Su, Daejeon 34122 (KR); KIM, Min Su, Daejeon 34122 (KR); PARK, Jong Seok, Daejeon 34122 (KR); SU, Jun Hyo, Daejeon 34122 (KR); LEE, Jae Hwan, Daejeon 34122 (KR); SIM, Min Kyu, Daejeon 34122 (KR); BAE, In Bong, Daejeon 34122 (KR)
(74) Representative: BCKIP Part mbB
(86) International application number: PCT/KR2024/011461
(87) International publication number: WO 2025/033890

(57) **Abstract**

Example embodiments provide a method of displaying an intermediate roll map. The method includes: transmitting an application programming interface (API) call to a server storing coordinate-related measurement data, in which the coordinate-related measurement data includes measurement data collected based on measurement of an electrode sheet and coordinates related to the measurement data; transmitting the coordinate-related measurement data in response to the API call; and displaying the coordinate-related measurement data.

## Description

### [Technical Field]

The present invention relates to a system configured to visually display an intermediate roll map representing a roll-to-roll process of manufacturing a secondary battery. The present application claims the benefit of priority based on Korean Patent Application No. 10-2023-0103079, filed on August 7, 2023, and the entire contents of the Korean patent application is incorporated herein by reference.

### [Background Art]

Secondary batteries can be charged and discharged a plurality of times unlike primary batteries. Secondary batteries have been widely used as energy sources for various types of wireless devices such as handsets, laptop computers, and cordless vacuum cleaners. Recently, a main use of secondary batteries is moving from mobile devices to mobility, as manufacturing costs per unit capacity of secondary batteries drastically decrease due to improved energy density and economies of scale and a range of battery electric vehicles (BEVs) increases to the same level as fuel vehicles.

A secondary battery is manufactured by an electrode process, an assembly process, and an activation process. Among these processes, the electrode process is a key process in determining the yield and performance of a battery cell. The electrode process may include a coating process, a roll press process, and a slitting process. In the coating process, an active material and an insulating material may be applied to a surface of a current collector. In the roll press process, an electrode may be pressed by pressing rolls. In the roll press process, a density, performance and surface quality of the electrode may be determined. In the slitting process, the electrode may be cut into a plurality of electrodes according to the design of battery cells.

### [Disclosure]

### [Technical Problem]

The present invention is directed to providing a method of displaying an intermediate roll map including information about quality and defects in an electrode manufacturing process.

### [Technical Solution]

Example embodiments of the present invention provide a method of generating an intermediate roll map. The method includes: transmitting an application programming interface (API) call to a server storing coordinate-related measurement data, in which the coordinate-related measurement data includes measurement data collected based on measurement of an electrode sheet and coordinates related to the measurement data; transmitting the coordinate-related measurement data in response to the API call; and displaying the coordinate-related measurement data.

The coordinate-related measurement data may be displayed in the form of graph.

The coordinate-related measurement data may be transmitted in a JSON format.

The coordinate-related measurement data may indicate a loading of an electrode slurry on the electrode sheet.

The coordinate-related measurement data may indicate a thickness of an electrode slurry on the electrode sheet.

A part of the coordinate-related measurement data may be visualized, and the coordinate-related measurement data may be displayed together with a scroll for selecting the visualized part of the coordinate-related measurement data.

Example embodiments provide a method of displaying an intermediate roll map. The method includes displaying coordinate-related inspection data generated based on inspection of an electrode sheet and coordinate-related measurement data generated based on measurement of the electrode sheet, and the coordinate-related inspection data is displayed in the form of table.

The coordinate-related measurement data may be further displayed in the form of graph.

The table may include a plurality of columns, and a part of the coordinate-related measurement data displayed in the form of graph may be determined by selecting the plurality of columns.

The coordinate-related inspection data may indicate a mismatch between a top coated lane on a top surface of the electrode sheet and a bottom coated lane on a bottom surface of the electrode sheet opposite to the top surface.

The coordinate-related inspection data may indicate widths of coated lanes and uncoated parts of the electrode sheet.

The coordinate-related inspection data may indicate a width of an overlay between a coated lane and an insulating layer on the electrode sheet.

The coordinate-related inspection data may indicate a width of an insulation layer on the electrode sheet.

### [Advantageous Effects]

Example embodiments of the present invention provide a method of displaying an intermediate roll map enabling feedback, feedforward, and tracking of an electrode process.

Effects achievable from example embodiments of the present invention are not limited to the above-described effects, and other effects that are not described herein will be clearly derived and understood by those of ordinary skilled in the art to which the example embodiments of the present invention pertain from the following description. That is, unintended effects achieved when the example embodiments of the present invention are implemented are derivable by those of ordinary skilled in the art from the example embodiments of the present invention.

### [Brief Description of the Drawings]

FIG. 1 illustrates a secondary battery manufacturing system according to example embodiments.
FIG. 2 is a flowchart of a method of displaying an intermediate roll map according to example embodiments.
FIGS. 3 and 4 illustrate a screen displaying an intermediate roll map according to example embodiments.
FIG. 5 illustrates a roll map generating system according to example embodiments.
FIG. 6 illustrates a roll map generating system according to example embodiments.

### [Best Mode]

Hereinafter, embodiments of the present invention will be described in detail with reference to the accompanying drawings. Before describing embodiments of the present invention, the terms or expressions used in the present specification and claims should not be construed as being limited to as generally understood or as defined in commonly used dictionaries, and should be understood according to meanings and concepts corresponding to the present invention on the basis of the principle that the inventor(s) of the application can appropriately define the terms or expressions to optimally explain the present invention.

Therefore, embodiments set forth herein and configurations illustrated in the drawings are only examples of the present invention and do not reflect all the technical ideas of the present invention and thus it should be understood that various equivalents and modifications that replace the configurations would have been made at the filing date of the present application.

Well-known configurations or functions related to describing the present invention are not described in detail when it is determined that they would obscure the subject matter of the present invention due to unnecessary detail.

Because embodiments of the present invention are provided to more fully explain the present invention to those of ordinary skill in the art, the shapes, sizes, etc. of components illustrated in the drawings may be exaggerated, omitted, or schematically illustrated for clarity. Therefore, it should not be understood that the sizes or proportions of components fully reflect the actual sizes or proportions thereof.

### (First Embodiment)

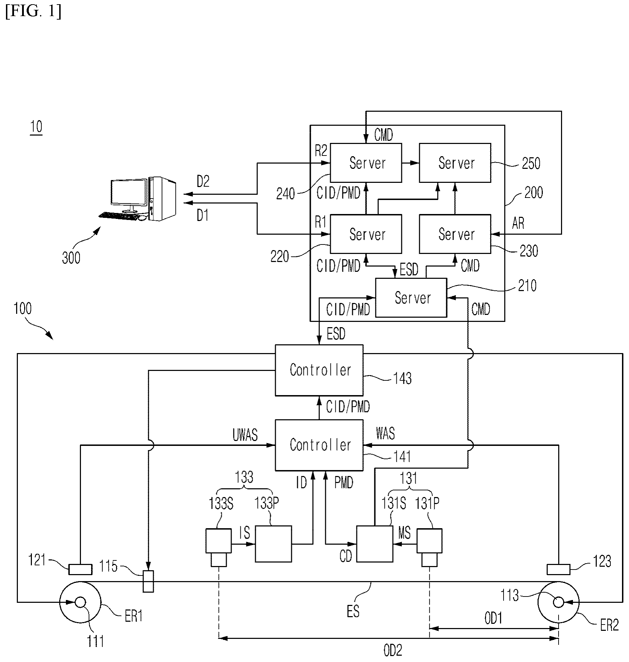

FIG. 1 illustrates a secondary battery manufacturing system 10 according to example embodiments.

Referring to FIG. 1, the secondary battery manufacturing system 10 may include a secondary battery manufacturing apparatus 100, a roll map generator 200, and a client device 300.

The secondary battery manufacturing apparatus 100 may be configured to perform a secondary battery manufacturing process. The secondary battery manufacturing apparatus 100 may include an unwinder 111, a rewinder 113, a processing apparatus 115, a first rotary encoder 121, a second rotary encoder 123, a measuring device 131, an inspector 133, a first controller 141, and a second controller 143.

The unwinder 111 may be configured to unwind an electrode sheet ES from an electrode roll ER1. The rewinder 113 may be configured to wind the electrode sheet ES into an electrode roll ER2. Accordingly, the electrode sheet ES may be moved between the unwinder 111 and the rewinder 113.

A process of manufacturing a secondary battery (e.g., an electrode process) may be performed on the electrode sheet ES. The electrode process is performed on the electrode sheet ES unwound from the electrode roll ER1 and wound into the electrode roll ER2 and thus may be referred to as a roll-to-roll process.

The electrode sheet ES may be processed by the processing apparatus 115. For example, the processing apparatus 115 may include a coater, and the electrode sheet ES may be coated with an electrode slurry. As another example, the processing apparatus 115 may include a pressing roll, and the roll pressing process may be performed on the electrode sheet ES coated with the electrode slurry. As another example, the processing apparatus 115 may include a splicing die and a scrap port, and a part of the electrode sheet ES may be scrapped. As another example, the processing apparatus 115 may include a slitting knife, and the electrode sheet ES may be separated into a plurality of electrode sheets.

The coating process is a process of applying a coating material such as the electrode slurry to the electrode sheet ES. The electrode slurry may include an electrode active material, a conductive agent, a binder, and a solvent. The electrode slurry may be provided by dissolving the electrode active material, the conductive additive, the binder, etc. in the solvent.

The roll pressing process is a process of passing the electrode sheet ES coated with the electrode slurry between pressing rolls facing each other. By using the pressing rolls, a surface of an electrode may be planarized and a bonding force between the active material and a current collector may be increased.

The coating process and the roll pressing process are performed on the electrode sheet ES having a broad width to enhance the production (e.g., GWh) per line of secondary battery production equipment. Thereafter, in the slitting process, the electrode sheet ES having the broad width may be cut according to the specifications of a battery cell.

The first rotary encoder 121 may be configured to sense an amount of the electrode sheet ES unwound from the electrode roll ER1 by the unwinder 111. Accordingly, the first rotary encoder 121 may be configured to generate an unwinding amount signal UWAS indicating an unwinding amount of the electrode sheet ES. The first rotary encoder 121 may be configured to transmit the unwinding amount signal UWAS to the first controller 141. The first controller 141 may be configured to collect input amount data based on the unwinding amount signal UWAS of the electrode sheet ES. The input amount data may represent the amount of a material (i.e., the electrode roll ER1) input into the secondary battery manufacturing apparatus 100 to manufacture a secondary battery.

The second rotary encoder 123 may be configured to sense an amount of the electrode sheet ES wound into the electrode roll ER2 by the rewinder 113. Accordingly, the second rotary encoder 123 may be configured to generate a winding amount signal WAS indicating a winding amount of the electrode sheet ES. The second rotary encoder 123 may be configured to transmit the winding amount signal WAS to the first controller 141. The first controller 141 may be configured to collect exhaustion amount data based on the winding amount signal WAS of the electrode sheet ES. The exhaustion amount data may represent production performance of the secondary battery manufacturing apparatus 100.

In some cases, a part of the electrode sheet ES may be scrapped and thus the amount of the electrode sheet ES unwound by the unwinder 111 may be different from the amount of the electrode sheet ES wound by the rewinder 113. In addition, when the electrode sheet ES is stretched due to pressure in a subsequent process such as the roll pressing process, the amount of the electrode sheet ES unwound by the unwinder 111 may be different from the amount of the electrode sheet ES wound by the rewinder 113.

As a non-limiting example, the first controller 141 and the second controller 143 may be programmable logic controllers (PLCs). A PLC is a special type of microprocessor-based controller that stores instructions using a programmable memory and implements functions such as logic, sequencing, timing, counting and arithmetic operations to control machines and processes. It is easy to operate and program the PLC.

The first and second controllers 141 and 143 may include a power supply, a CPU, an input interface, an output interface, a communication interface, and memory devices. The power supply may be configured to supply power to the other components of the first and second controllers 141 and 143, such as the CPU, the input interface, the output interface, the communication interface, and the memory devices, to operate the first and second controllers 141 and 143. The memory devices may include a read only memory (ROM) configured to store system programs such as operating systems, and a random access memory (RAM) configured to store data such as user programs, state information of input and output devices, and values of a timer, a counter, and other internal devices. The CPU may be configured to implement logic and control communication between modules that convert an input signal into an output operation signal. The CPU may operate based on a system program and a user program stored in the memory devices. The CPU may be configured to write or read inspection data and measurement data to or from data areas of the memory devices, based on the system program and the user program. Conditions or data of industrial devices and production processes may be transmitted to the CPU through an input module. A result of processing performed by the CPU may be transmitted to an actuator through the output module. The communication interface may be configured to transmit and receive data between the first and second controllers 141 and 143 or between the second controller 143 and a server 210.

However, embodiments are not limited thereto, and the first and second controllers 141 and 143 may each include one of a simple controller, a complex processor such as a microprocessor, a CPU or a GPU, a processor configured by software, dedicated hardware, and firmware. The first and second controllers 141 and 143 may be implemented, for example, by a general-purpose computer or application-specific hardware such as a digital signal processor (DSP), a field-programmable gate array (FPGA) or an application specific integrated circuit (ASIC).

The first controller 141 may be configured to collect coordinate data CD of the electrode sheet ES, based on the unwinding amount signal UWAS or the winding amount signal WAS of the electrode sheet ES. For example, the first controller 141 may determine a moving distance of the electrode sheet ES based on the winding amount signal WAS of the electrode sheet ES and thus a position of a part of the electrode sheet ES, which is wound by the rewinder 113, on the electrode sheet ES may be determined at each time point at which the coating process is performed. Hereinafter, the technical idea of the present invention will be described with respect to an embodiment in which the first controller 141 collects the coordinate data CD based on the winding amount signal WAS of the electrode sheet ES.

The coordinate data CD may include coordinates matching each part of the electrode sheet ES. That is, arbitrary points on the electrode sheet ES may have coordinates. The coordinates may be one-dimensional (1D) quantities in a machine direction in which the electrode sheet ES is moved (or a longitudinal direction of the electrode sheet ES) but are not limited thereto. The coordinates may be two-dimensional (2D) quantities in the machine direction and a transverse direction of the electrode sheet ES (or a width direction of the electrode sheet ES).

The measuring device 131 may be configured to measure the electrode sheet ES to collect measurement data of the electrode sheet ES. The measurement data may be raw data, and evaluation and a judgement value of a part of the electrode sheet ES from which the measurement data is collected may be determined by processing the measurement data. As a non-limiting example, the measuring device 131 may be one of a web gauge of Thermofisher Scientific and a thickness meter.

The measuring device 131 may be configured to scan the electrode sheet ES. During the scanning of the electrode sheet ES, the measuring device 131 may move in the transverse direction of the electrode sheet ES. During one scanning, a sensing part 131 S of the measuring device 131 may move from one end of the electrode sheet ES in the transverse direction to another end of the electrode sheet ES in the transverse direction.

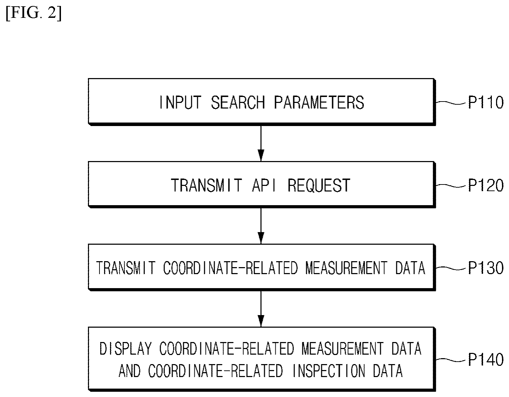

While the measuring device 131 performs scanning in the transverse direction, the electrode sheet ES may be moved in the machine direction by the unwinder 111 and the rewinder 113. Accordingly, a part of the electrode sheet ES measured by the measuring device 131 may be in a zigzag form as indicated by a one-dot chain line of FIG. 2.

The measurement data may include a result of inspection expressed numerically. The measurement data may include data of a loading of a coating material on the electrode sheet ES and thickness data of the coating material on the electrode sheet ES. Here, the loading is an amount of the coating material loaded per unit area of the electrode sheet ES and may be an area density of the coating material

The measuring device 131 may include the sensing part 131S and a processor 131P. The sensing part 131S may be configured to sense a physical quantity of the electrode sheet ES to generate a measurement signal MS. For example, the sensing part 131S may include a time delay and integration (TDI) camera, a complementary metal oxide semiconductor (CMOS) image sensor, a time-of-flight (TOF) sensor, etc. The sensing part 131S may include an emitter and a receiver that are configured to perform measurement using a non-destructive signal such as ultrasound waves, microwaves, terahertz waves, or infrared rays. The sensing part 131S may include analog and/or digital sensors, such as a biosensor, a chemical sensor, a composition sensor, a current and/or power meter, an air quality sensor, a gas sensor, a hall effect sensor, a brightness level sensor, and an optical sensor. The measuring device 131 may include a pressure sensor, a temperature sensor, an ultrasonic sensor, a proximity sensor, a door state sensor, a motion tracking sensor, a humidity sensor, a visible light and infrared sensor, a camera, etc.

The processor 131P may be configured to receive the measurement signal MS sensed by the sensing part 131S to collect measurement data. The processor 131P may be configured to collect measurement data based on the measurement signal MS. The processor 131P may be connected to the sensing part 131S by wire or wirelessly. The processor 131P may be configured to calibrate the measurement data by adding an offset measurement amount to each of measured values of the measurement data. Due to the progress of a process and the aging of equipment, the measured values of the measurement data may be different from actual values. The processor 131P may correct the measured values of the measurement data based on the offset measurement amount to improve the reliability of the roll map generator 200 and a roll map generating method. The offset measurement amount may be determined based on information about an equipment system obtained by a method such as a sample test.

The inspector 133 may be configured to inspect the electrode sheet ES to collect inspection data ID. The inspector may include a color sensor, a joint sensor, a datum point sensor, or a vision machine.

For example, the inspection data ID may include data about the appearance of the electrode sheet ES collected by an image-based inspection device such as a vision machine, data about disconnections and joints of the electrode sheet ES, data about a part of the electrode sheet ES on which sampling inspection is performed, data about a part of the electrode sheet ES to be scrapped, data about a scrapped part of the electrode sheet ES, data about whether the coating material and the insulating material on the electrode sheet ES are defective or not, data about datum points indicating a position on the electrode sheet ES, and defect data such as a pinhole defect, a crater defect, a line defect, a crack defect, a side ring defect, an island defect, a folded defect, a wrinkle defect, a pit defect, and a scratch defect. The inspection data ID may include a judgement value for the quality of a part of the electrode sheet ES (e.g., a value indicating whether there is a defect or not and the type of the defect) .

Here, the data of the appearance of the electrode sheet ES may include width data of the electrode sheet ES determined based on an image-based inspection, width data of the insulating layer on the electrode sheet ES, overlay data indicating an overlapping width between the coating material (i.e., the electrode slurry) and the insulating layer on the electrode sheet ES, and mismatch data indicating misalignment between coated lanes on a bottom surface of the electrode sheet ES and coated lanes on a top surface of the electrode sheet ES. The datum points may be formed on the electrode sheet ES at certain intervals, and other elements on the electrode sheet ES may be located based on the datum points. Original inspection data (e.g., an image of a defective part of the electrode sheet ES) may be stored in a separate server of the roll map generator 200.

The inspection data ID may include width data of coated lanes and uncoated parts of the electrode sheet ES determined based on the image-based inspection, size data such as a width of the insulating layer and an overlapping width between the coating material and the insulating layer, mismatching data between the coated lanes on the top surface of the electrode sheet ES and the coated lanes on the bottom surface of the electrode sheet ES, and the like.

The inspector 133 may include a sensing part 133S and a processor 133P. The sensing part 133S may be configured to sense physical quantity of the electrode sheet ES to generate a measurement signal MS. For example, the sensing part 133S may include one of the sensors described above in relation to the sensing part 131S.

The processor 133P may be configured to receive and process a raw inspection signal MS sensed by the sensing part 133S to collect inspection data ID. The processor 133P may include an algorithm for processing an image of a part of the electrode sheet ES to determine an inspection value for the inspection data ID or a model (e.g., an artificial neural network) trained to determine an inspection value based on the image of the part of the electrode sheet ES.

The measurement data and the inspection data ID described above may be time series data. The measurement data and the inspection data ID may be temporally ordered. The measurement data and the inspection data ID may be indexed by time. The measurement data may include measured values and a time value (or time values) matching the measured values. The inspection data ID may include inspection values and a time value (or time values) matching the inspection values. That is, the measurement data and the inspection data ID may be stored based on point in times when measurement and inspection are performed, and may be related to time. The time values of the measurement data and the inspection data ID may be, for example, in the form of timestamp but are not limited thereto.

For example, the measurement data (e.g., data of an amount of loading on the electrode sheet ES or thickness data of the electrode sheet ES) may include a series of measured values and time values related to the series of measured values. The measured values and the time values may be matched in a one-to-one manner but are not limited thereto. The measured values may be matched to a single timestamp, which indicates a start point of the measurement, in a many-to-one manner. As another example, the defect data may include a value indicating a defect and a time value related to the value indicating the defect. Here, the value indicating the defect should be understood to mean that the value include information about at least one of the presence of defect and the type of defect.

The first controller 141 may be in operative communication with the first and second rotary encoders 121 and 123, the measuring device 131, and additional measuring devices and inspectors through a wired or wireless data network. The data network may be unidirectional or bidirectional. The data network may be implemented by a physical channel, WiFi, public networks and/or specialized networks using Bluetooth or other frequency bands.. The first and second rotary encoders 121 and 123, the measuring device 131, and additional measuring devices and inspectors may be configured to collect data from equipment, a workpiece, an intermediate product, and a product in the secondary battery manufacturing apparatus 100 or to generate a signal for collecting data therefrom. The first controller 141 may be configured to transmit the coordinate data CD to the processor 131P.

The processor 133P may be configured to generate coordinate-related measurement data CMD based on the coordinate data CD and the measurement data. The processor 131P may be configured to relate the coordinate data CD to the measurement data to generate the coordinate-related measurement data CMD. In general, the measurement data may be processed based on a trigger point. Examples of the processing of the measurement data may include storing the measurement data, manipulating the measurement data (e.g., generating the coordinate-related measurement data CMD), and transmitting the measurement data.

As a non-limiting example, a trigger point for processing the measurement data may be the completion of scanning. For example, the sensing part 131S may scan the electrode sheet ES in the transverse direction, and the measurement data may be stored, processed, manipulated, and transmitted whenever scanning is performed. As another example, the trigger point may be completion of performing scanning multiple times or partial completion of scanning.

The electrode sheet ES may be divided into a plurality of sections based on scanning performed by the sensing part 131S of the measuring device 131. That is, each of the plurality of sections may correspond to one scanning performed by the sensing part 131S.

According to example embodiments, the measuring device 131 may be configured to calibrate the coordinate data CD, based on a position of the measuring device 131. More specifically, the measuring device 131 may be configured to calibrate the coordinate data CD based on an offset length OD, so that coordinates of the coordinate data CD may be related to the measured values of the measurement data.

The measuring device 131 may collect measurement data of a part of the electrode sheet ES corresponding to (e.g., overlapping) the sensing part 131S, and the coordinate data CD may be collected by the second rotary encoder 123 spaced apart from the sensing part 131s as described above. Accordingly, parts of the electrode sheet ES corresponding to the coordinate data CD and the measurement signal MS, which are generated simultaneously, may differ.

According to example embodiments, the coordinate-related measurement data CMD may be provided by calibrating the coordinate data CD, which is collected at the same point in time as the measurement data, based on an offset length OD1 and relating the calibrated coordinate data CD to the measurement data. The coordinate-related measurement data CMD may include measured values, a time value matching the measured values, a start coordinate, and an end coordinate. The time value may be a timestamp indicating a date and time when the measurement data is collected. The start coordinate and the end coordinate may indicate a start point and an end point of a part of the electrode sheet ES from which the measurement data is collected. The start coordinate and the end coordinate may be determined based on the calibrated coordinate data CD. The coordinate-related measurement data CMD may include a measuring device ID identifying the measuring device 131 and an equipment ID identifying the secondary battery manufacturing apparatus 100.

As another example, the sensing part 131S may be directly connected to a position measuring device such as the first and second rotary encoders 121 and 123 or be configured to sense a datum point on the electrode sheet ES. In this case, the processor 131P may be configured to collect the coordinate-related measurement data CMD, based on the measurement signal MS transmitted from the sensing part 131S.

A plurality of guide rolls may be interposed between the sensing part 131S and the rewinder 113 to define a moving path of the electrode sheet ES. Accordingly, the offset length OD1 may be defined as a length of the electrode sheet ES between the rewinder 113 and a part of the electrode sheet ES sensed by the sensing part 131S. The offset length OD1 may be equal to or greater than a straight line distance between the sensing part 131S and the rewinder 113.

The processor 131P may be configured to generate compressed measurement data PMD based on the measurement data and the coordinate data CD. The compressed measurement data PMD may include a representative value of measurement data of each of the plurality of sections of the electrode sheet ES, a judgement value, and a start coordinate and an end coordinate of each of the plurality of sections of the electrode sheet ES. The compressed measurement data PMD may further include a timestamp indicating a date and time when the measurement data of the plurality of sections is collected, the measuring device ID, and the equipment ID.

The processor 131P may be configured to calculate the representative value of the measurement data of each of the plurality of sections of the electrode sheet ES. The representative value of the measurement data of each of the plurality of sections of the electrode sheet ES may include at least one of an average, a standard deviation, a median value, a maximum value, or a minimum value of the measurement data of each of the plurality of sections.

For example, when the coordinate-related measurement data CMD includes 1,500 measured values corresponding to a scan performed by the sensing part 131S, the compressed measurement data PMD may include a single representative value calculated based on the 1,500 measured values. Accordingly, a size of the compressed measurement data PMD may be different from a size of the coordinate-related measurement data CMD. The size of the compressed measurement data PMD may be less than the size of the coordinate-related measurement data CMD. A start coordinate and end coordinate of the compressed measurement data PMD are substantially the same as the start coordinate and end coordinate of the corresponding coordinate-related measurement data CMD.

A server 220, which will be described below, performs various tasks for managing the production of a secondary battery, in addition to generating a roll map. According to example embodiments, the server 220 may generate a roll map based on the compressed measurement data PMD instead of the coordinate-related measurement data CMD substantially the same in size as the raw measurement data, thus reducing resources of the server 220 to be allocated to generate and store the roll map. Accordingly, continuous manufacturing management may be provided from the server 220, and the reliability in the manufacture of a secondary battery may be improved.

A judgement value for the plurality of sections of the electrode sheet ES may be determined by processing the measurement data by a set method. When an amount of the measured coating material on the electrode sheet ES (e.g., an amount of loading on the electrode sheet ES or a thickness of the electrode sheet ES) is in a set range including upper and lower limits, a corresponding part of the electrode sheet ES may be determined as a good-quality part. The corresponding part of the electrode sheet ES may be determined as defective, when the amount of the measured coating material on the electrode sheet ES (e.g., the amount of loading on the electrode sheet ES or the thickness of the electrode sheet ES) is less than the lower limit or greater than the upper limit.

As another example, a measured value (or a representative value) that is in a first range may be determined as normal, a measured value (or a representative value) that is in a second range greater than the first range may be determined as excessive, a measured value (or a representative value) that is in a third range greater than the second range may be determined as very excessive, a measured value (or a representative value) that is in a fourth range less than the first range may be determined as insufficient, and a measured value (or a representative value) that is in a fifth range less than the fourth range may be determined as very insufficient.

Here, when a lower limit of the second range is greater than or equal to an upper limit of the first range, the second range is greater than the first range. Similarly, when an upper limit of the fourth range is less than or equal to a lower limit of the first range, the fourth range is less than the first range.

The processor 131P may be configured to transmit the compressed measurement data PMD to the first controller 141. The processor 131P may be configured to transmit the coordinate-related measurement data CMD to the roll map generator 200 (more specifically, a server 230 of the roll map generator 200). The coordinate-related measurement data CMD may be transmitted to the server 230 through the server 210 but embodiments are not limited thereto. The coordinate-related measurement data CMD may be directly transmitted from the processor131P to the server 230.

The processor 133P may be configured to transmit the inspection data ID to the first controller 141. The first controller 141 may be configured to generate (or collect) coordinate-related inspection data CID based on the inspection data ID and the coordinate data CD. Similar to the coordinate-related measurement data CMD, the coordinate-related inspection data CID may be provided by calibrating the coordinate data CD based on an offset length OD2 and relating the calibrated coordinate data CD to the inspection data ID but embodiments are not limited thereto.

As another example, the processor 143P may receive the coordinate data CD from the first controller 141, and the coordinate-related inspection data CID may be generated by the processor 143P based on the coordinate data CD and the inspection data ID.

The first controller 141 may be configured to transmit the compressed measurement data PMD and the coordinate-related inspection data CID to the second controller 143. The second controller 143 may be configured to transmit the compressed measurement data PMD and the coordinate-related inspection data CID to the roll map generator 200. However, embodiments are not limited thereto, and the first controller 141 may directly transmit the compressed measurement data PMD and the coordinate-related inspection data CID to the roll map generator 200.

The second controller 143 may be configured to control operations of the unwinder 111, the rewinder 113, and the processing apparatus 115. The second controller 143 may be configured to generate a signal for operating or stopping the unwinder 111, the rewinder 113, and the processing apparatus 115. The signal for operating or stopping the unwinder 111, the rewinder 113, and the processing apparatus 115 may be generated based on electrode specification data ESD, the compressed measurement data PMD, the inspection data ID, and an additional inspection signal and measurement signal.

The roll map generator 200 may include the servers 210, 220, 230, 240, and 250. The servers 210, 220, 230, 240, and 250 may be separate entities that perform various functions, including generating a roll map and an intermediate roll map, storing the roll map and the intermediate roll map, or relaying communication between the servers 210, 220, 230, 240, and 250. Unlike that shown in FIG. 1, some of the servers 210, 220, 230, 240, and 250 may be integrated. For example, the server 220 and the server 230 may be integrated, the server 220 and the server 240 may be integrated, or the servers 220, 240, and 250 may be integrated.

The roll map generator 200 may be configured to generate a roll map including data related to the electrode sheet ES. The roll map may represent the electrode sheet ES based on coordinates indicating a position on the electrode sheet ES. As described above, a secondary battery manufacturing process may be performed on the electrode sheet ES. The roll map may include data that represents a history of processes performed on the electrode sheet ES and relates to coordinates. Accordingly, the roll map enables feedback, feedforward, and tracking of a secondary battery manufacturing process as described below.

The roll map may include event data indicating events of a roll-to-roll process of the electrode sheet ES. Generally, the event data is generated according to the progress of a process and thus is time series data. Accordingly, data of process events may include values indicating the events and time values matched thereto. The time series data may be temporally ordered. Temporal ordering is a main feature of time series data and is organizing events in an order in which they occur and arrive to be processed. That is, the time series data may be stored based on a point in time when an event occurs (i.e., when inspection and measurement are performed or when an action of a process is performed), and the event may be matched to time values.

The manufacture of a secondary battery involves a series of different processes, and a leading process affects the following process. Feed forward should be hereinafter understood as correcting the following process based on data generated according to a result of the leading process. In this case, when time series data of the leading process does not directly match a workpiece, an intermediate product, and a product of the real world, it is difficult to reflect the time series data of the leading process in the following process. Here, the workpiece is an article provided as a result of each process, e.g., the electrode sheet ES of FIG. 1 on which the coating process, the roll press process, and the slitting process are performed. The intermediate product may be one of separators cut by the notching process, electrodes, and an assembly thereof. The intermediate product may be a structure including a housing and an electrode assembly included in the housing (in some cases, the structure further includes an electrolyte). The product is an article processed by the activation process to be operable as a secondary battery. The above-described definitions of the workpiece, the intermediate product, and the product are definitions thereof only in one aspect and thus should not be understood as excluding general definitions thereof.

For feedforward, time series data should be related to positions on workpieces, components, intermediate products, and products of the real world. In the roll map, time series data such as measurement data may be related to coordinate data CD based on the amount of movement (i.e., the amount of winding or the amount of unwinding) of the electrode sheet ES. The roll map may allow time series data to be related to coordinate data including coordinates of the positions on the workpieces, the components, the intermediate products, and the products of the real world. Accordingly, the generation of the roll map and feedforward based on the roll map may improve the efficiency of production and quality by digitizing and objectifying aspects of a process that depend on an operator's discretion.

Roll maps may be generated in units of lots. The electrode sheet ES may be wound into the second electrode roll ER2, and the second electrode roll ER2 may be cut and separated from the electrode sheet ES connected to the first electrode roll ER1 after a target amount of winding is reached. A lot is a production unit of the roll-to-roll process, and the electrode roll ER2 separated from the electrode sheet ES is an example of the lot. Accordingly, the server 220 may be configured to store a roll map of a previous process. The roll map of the leading process may correspond to the first electrode roll ER1. In addition, the server 220 may be configured to generate and store a roll map of a current process. The roll map of the current process may correspond to the second electrode roll ER2.

A roll map of a preceding lot may be used to improve a process of a following lot, and this operation may be referred to as process feedback. The process feedback using the roll map may include identifying process conditions and process parameters that cause a problem and a defect, based on data included in the roll map.

Furthermore, as described below, roll maps may be cumulatively generated for workpieces, intermediate products, and products of unit processes to track process history of products (e.g., battery cells, battery modules, or battery packs) on the market. For example, a battery cell may include a cell identifier (ID) on an electrode assembly or a case. The cell ID may include lot numbers and coordinate information of electrodes and a separator included in the battery cell. In other words, the cell ID may be related to a roll map of the electrodes and the separator included in the battery cell. Accordingly, when an event such as a quality issue occurs in a battery cell on the market, a history of collective data of the manufacture of the battery cell may be retrieved based on the cell ID.

The compressed measurement data PMD and the coordinate-related inspection data CID may be transmitted to the server 220 via the server 210. The server 210 may be a communication server. The server 210 may be, for example, a server for log data-based communication but is not limited thereto. The server 210 may be a program for communication between the second controller 143 of manufacturing equipment and the server 220 for manufacturing management. The server 210 may be implemented by hardware as described below. A language and protocol of the server 220 may be different from a language and protocol of the second controller 143. For example, the language of the server 220 may be SQL, and the language of the second controller 143 may be a ladder diagram.

The server 210 may be configured to convert the electrode specification data ESD transmitted from the server 220 into the language of the second controller 143. In addition, the server 210 may be configured to convert the compressed measurement data PMD and the coordinate-related inspection data CID into the language of the server 220, and record compressed measurement data PMD and the coordinate-related inspection data CID in a database of the server 220. The compressed measurement data PMD and the coordinate-related inspection data CID may be stored in a JSON format in the database of the server 220.

The electrode specification data ESD may include model information and a recipe of the electrode sheet ES. The electrode specification data ESD may include all matters related to the processing of the electrode sheet ES, such as process conditions, including the number of lots to be processed in a current process, the number of coated lanes to be formed on the electrode sheet ES, temperature, humidity, pressure, etc., and process parameters, including a moving speed of the electrode sheet ES, a discharge rate of a coating die, pressure of pressure rolls, etc.

For control of a process, a communication line may be installed between the second controller 143 and the server 220 to connect the second controller 143 and the server 220 via the server 210 . Accordingly, data transmission through the second controller 143 may reduce resources required for the installation of the communication line and ensure efficient data processing and management, compared to a case in which the first and second rotary encoders 121 and 123 and the measuring device 131 directly transmit the unwinding amount signal UWS, the winding amount signal WS, and the measurement signal MS to the server 220 and a case in which the first controller 141 directly transmits the compressed measurement data PMD to the server 220.

The server 220 may be configured to generate a roll map. The roll map may include data about specifications of a lot. The specifications of the lot may include, for example, a lot number, a length of the wound electrode sheet ES, a width of the electrode sheet ES, and materials and a composition used to process the electrode sheet ES

According to example embodiments, the server 220 may be a data processing system that supports all activities required to manage the manufacture of a secondary battery, such as work schedule management, work instructions, quality control, and work performance aggregation. The server 220 may be, for example, a manufacturing execution system (MES). The server 220 may be configured to perform inputting, processing, outputting, and communication of data necessary to perform an electrode manufacturing process, including the coating process, the roll press process, and the slitting process.

The server 230 may be configured to store the coordinate-related measurement data CMD. The server 230 may be configured to transmit the coordinate-related measurement data CMD to the server 240 in response to an API request AR from the server 240. The API request AR may include information for identifying the coordinate-related measurement data CMD. The API request AR may include, for example, a timestamp, a start coordinate, and an end coordinate.

More specifically, a second request R2 to display an intermediate roll map may be transmitted to the server 240 from the client device 300. The second request R2 may be generated by inputting search parameters for generating the API request AR. The search parameters may include coordinates of the coordinate-related measurement data CMD, equipment code of the secondary battery manufacturing apparatus 100 from which the measurement data MED is collected, a date and time when the measurement data MED is collected, and measurement items.

The equipment code may include information for identifying the secondary battery manufacturing apparatus 100, such as the type of installation and an installation site. The date and time may be in the form of a timestamp. The measurement items represent physical quantities, such as a loading and a thickness, of the electrode sheet ES that are represented by the measurement data MED.

The server 240 may be configured to generate an intermediate roll map. The server 240 may be configured to generate the API request AR in response to the second request R2. The API request AR may be generated based on the search parameters. The server 240 may be configured to receive the coordinate-related measurement data CMD from the server 230. The server 240 may store data D1 of the roll map. The server 240 may be configured to relate the data D1 of the roll map to the coordinate-related measurement data CMD. The server 240 may be configured to transmit to the client device 300 a uniform resource locator (URL) (or a schema) including a source code for displaying data D2 of an intermediate roll map on the client device 300.

The client device 300 may access a source code for displaying the coordinate-related measurement data CMD and the coordinate-related inspection data CID through a URL (or schema) and thus may display an intermediate roll map.

The server 240 may also be configured to store and process the coordinate-related inspection data CID of the electrode sheet ES. The server 240 may manage the quality of processing the electrode sheet ES by continuously monitoring the processing of the electrode sheet ES based on the inspection data. According to example embodiments, the server 240 may be a statical process controller (SPC). The server 240 may collect and analyze manufacturing data in almost real time to identify problematic conditions in a timely manner and provide a notification to an operator before potential problems occur.

The server 250 may be configured to store data of the servers 220, 230, and 240. The server 250 may be configured to store the coordinate-related measurement data CMD and the compressed measurement data PMD. When the server 220 is an MES and the server 240 is an SPC, the servers 220 and 240 may be unsuitable to store the coordinate-related measurement data CMD and the compressed measurement data PMD for a long time. The server 250 may be, for example, a data warehouse, and may store the coordinate-related measurement data CMD and the compressed measurement data PMD for a long time based on a quality guarantee period of a product or the like. Accordingly, a manufacturing process of the product can be tracked according to a life cycle of the product.

The processors 131P and 133P and the servers 210, 220, 230, 240, and 250 may be implemented by hardware, firmware, software, or a combination thereof. For example, the processors 131P and 133P and the servers 210, 220, 230, 240, and 250 may include computing devices such as workstation computers, desktop computers, laptop computers, and tablet computers. The processors 131P and 133P and the servers 210, 220, 230, 240, and 250 may include a simple controller, a complex processor such as a microprocessor, a CPU, or a GPU, a processor configured by software, dedicated hardware, or firmware. The processors 131P and 133P and the servers 210, 220, 230, 240, 250 may be implemented, for example, by a general-purpose computer or application-specific hardware such as a digital signal processor (DSP), a field programmable gate array (FPGA), or an application specific integrated circuit (ASIC).

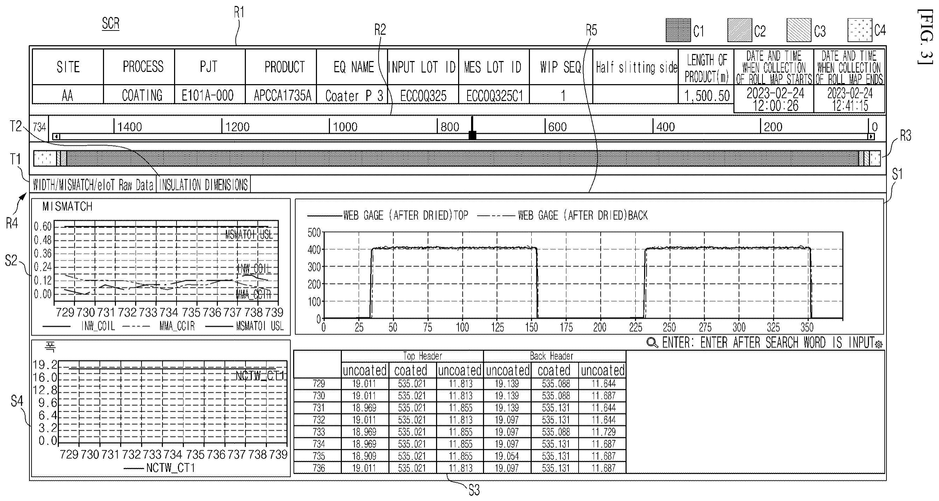

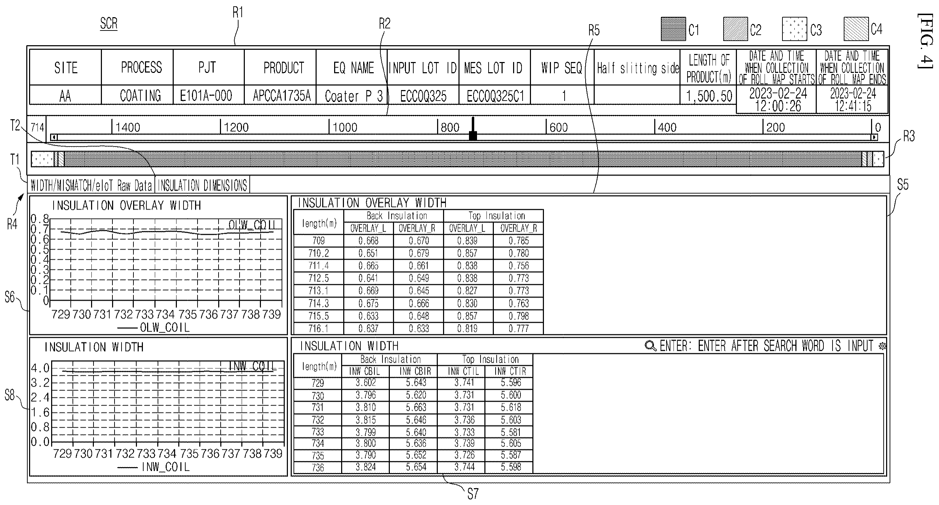

The server 220 stores and processes a large amount of data about general manufacturing management in addition to the roll map, and thus, the roll map stored in the server 220 may include simplified compressed measurement data PMD instead of the coordinate-related measurement data CMD including the raw measurement data. The server 220 may provide a roll map in response to a request from the client device 300. The client device 300 may display the data d2 of the intermediate roll map as shown in FIGS. 3 and 4.

The client device 300 may be a device, e.g., a mobile device, such as a workstation computer, a laptop computer, a desktop computer, a tablet PC, or a smart phone, or a wearable device, for communication with the roll map generator 200. The client device 300 may be configured to generate a request R1 to load a roll map or a request R2 to load an intermediate roll map. The client device 300 may be configured to transmit the requests R1 and R2 to the roll map generator 200. The client device 300 may include input tools for inputting the requests R1 and R2, and a display device displaying a screen SCR of FIG. 3 or 4.

The intermediate roll map may be provided by relating the coordinate-related measurement data CMD, including raw measurement data, to the roll map. The coordinate-related measurement data CMD may be related to the roll map, based on a timestamp and coordinates. The intermediate roll map may provide information about the raw measurement data to provide statistical production management, in addition to the roll map that provides information about defects and production performance based on the defects. Accordingly, the intermediate roll map may provide additional insights into the quality of a workpiece, the performance of a process, overall equipment effectiveness (OEE) drill down, sensing of anomality, traceability, preventive maintenance, and predictive alerts.

The servers 210, 220, 230, 240, and 250 may include a physical server or a cloud server. The servers 210, 220, 230, 240, and 250 may provide an operator with data and analysis results through various frameworks. The framework may include a protocol that supports data transmission to enable the client device 300 to visualize data through a user interface and provide updated visualizations as new data is calculated by the servers 220 and 230. The protocol supporting data transmission may include HTML, JavaScript, and/or JSON.

The servers 210, 220, 230, 240, and 250 may include various application programming interfaces (APIs) for storing data in a database and other data management tools. The APIs may also be used to retrieve data from databases of various data management systems. The data management systems may provide access to a database, pull or retrieve data from the database, and generate metrics. Here, the metrics are a tool for visualizing data. The metrics may include measured values generated in a time-series manner and be used to monitor applications and generate a status warning.

According to some embodiments, the operations of the processors 131P and 133P and the servers 210, 220, 230, 240, and 250 may be implemented as instructions stored in a machine-readable medium that may be read and executed by one or more processors. Here, the machine-readable medium may include an arbitrary apparatus for storing and/or transmitting information in a form readable by a machine (e.g., a computing device). Examples of the machine-readable medium may include a read-only memory (ROM), a random access memory (RAM), a magnetic disk storage medium, an optical storage medium, a flash memory, electrical, optical, acoustic or other types of radio signals (e.g., carrier waves, infrared signals, digital signals, etc.), and other signals.

The processors 131P and 133P and the servers 210, 220, 230, 240, and 250 may include firmware, software, routines, and instructions for performing the above-described operation, or a process described below. For example, the processors 131P and 133P and the servers 210, 220, 230, 240, and 250 may be instantiated in a memory.

However, this is for the sake of convenience in explanation, and the operations of the processors 131P and 133P and servers 210, 220, 230, 240, 250 may also result from computing devices, distributed computing devices, processors, firmware, software, routines, and other devices executing routines, and instructions.

The secondary battery manufacturing system 10 may implement a plug-in architecture with an API for obtaining data to provide a plug-and-play connection between the measuring device 131, the inspector 133, and additional measuring devices and inspectors. Accordingly, resources in a certain process step and a specific site can be easily transferred to a different process and a different site or new resources can be easily introduced into each process step and each site.

A data network between the components of the secondary battery manufacturing system 10 may include various types of communication channels, including unidirectional and bidirectional wired and wireless communications. For example, the data network may include an industrial protocol network such as OPC, Modbus, or ProfiNet. The communication channel may be a channel of dedicated conduit communication such as universal serial bus (USB), IEEE 802 (Ethernet), IEEE 1394 (FireWire), or other high-speed data communication standards.

In some embodiments, the roll map generator 200 may further include a manual input system that allows an operator to input manufacturing data. The roll map generator 200 may allow an operator to input data using an input tool, and a computer-based input of manufacturing data such as Excel file scrapping.

An architecture configured to generate the roll map and the intermediate roll map may be implemented by adding only the first controller 141 to elements essential in a modern process management system. That is, a system according to example embodiments is capable of using resources of an already-installed manufacturing site and reducing additional capital expenditure. In addition, applying the same architecture as existing manufacturing equipment to newly constructed manufacturing equipment may lead to improvement of the reliability of the manufacture of a secondary battery, sensing/improvement of problematic processes, and effective introduction of new processes.

### (Second Embodiment)

FIG. 2 is a flowchart of a method of displaying an intermediate roll map according to example embodiments.

FIGS. 3 and 4 illustrate a picture SCR on the client device 300 displaying an intermediate roll map.

Referring to FIGS. 1 and 2, in P110, search parameters may be input. As described above, the search parameters may include the start coordinate and end coordinate of the coordinate-related measurement data CMD, the equipment code of the secondary battery manufacturing apparatus 100, the date and time when the measurement data is collected, and the measurement items of the measurement data. The search parameters may be input to the client device 300. The search parameters may be transmitted to the server 240.

Next, in P120, an API request AR may be transmitted. The API request AR of the server 230 may be generated based on the search parameters. The API request AR may be generated by the server 240 and transmitted to the server 230.

Next, in P130, the coordinate-related measurement data CMD may be transmitted. The coordinate-related measurement data CMD stored in the server 230 may be transmitted to the server 240. Alternatively, the coordinate-related measurement data CMD may be transmitted directly to the client device 300 from the server 230.

Next, referring to FIGS. 1 to 4, in P140, the coordinate-related measurement data CMD and coordinate-related inspection data CID may be displayed. The server 240 may generate a URL (or schema) for displaying on the client device 300 the coordinate-related measurement data CMD responded from the server 230 and the coordinate-related inspection data CID stored in the database of the server 240. The URL (or schema) may be transmitted to the client device 300, and the client device 300 may access the coordinate-related measurement data CMD through the URL (or schema). Accordingly, the display device of the client device 300 may display the picture SCR of FIG. 3 or 4.

The picture SCR may include first to fifth regions R1, R2, R3, R4, and R5. An arrangement of the first to fifth regions R1, R2, R3, R4, and R5 is only an example, and the first to fifth regions R1, R2, R3, R4, and R5 may be arranged differently from those shown in FIGS. 3 and 4.

The first region R1 may include information about the secondary battery manufacturing apparatus 100 by which the intermediate roll map is derived and a product (or intermediate product) input to the secondary battery manufacturing apparatus 100. More specifically, the first region R1 may include information about a site (e.g., a production facility) at which the secondary battery manufacturing apparatus 100 generating the coordinate-related measurement data CMD and the stored coordinate-related inspection data CID is installed, a process performed by the secondary battery manufacturing apparatus 100, a product (or intermediate product) produced by the secondary battery manufacturing apparatus 100, the name of a final product produced using the product (or intermediate product) produced by the secondary battery manufacturing apparatus 100, an identification name (e.g., equipment ID) of the secondary battery manufacturing apparatus 100, a lot ID of a workpiece, an intermediate product, or a product put into a current process, a lot ID of a workpiece, an intermediate product, or a product produced by the current process, the number of operations on a lot of the current process, and whether half slitting is to be applied or not. Here, half slitting is to divide the electrode sheet ES in the transverse direction after performing the coating process and before performing the roll pressing process.

The second region R2 may include a scroll and a scale indicating a position of the scroll. The data D2 of the intermediate roll map may be related to coordinates similar to a roll map, and coordinate-related measurement data CMD and coordinate-related inspection data CID that are related to coordinates of a range in which the scroll is located may be displayed by moving the scroll bar. The scroll may be manipulated by clicking, dragging, scroll wheeling, or swiping an UI of the picture SCR. By manipulating the scroll bar, first to eighth scenes S1, S2, S3, S4, S5, S6, S7, and S8 on the fifth region R5 may display the coordinate-related measurement data CMD and the coordinate-related inspection data CID matching the coordinates indicated by the scroll bar.

The third region R3 represents components of the electrode sheet ES in the transverse direction. More specifically, the third region R3 represents a coated lane, uncoated parts, and insulation layers on the electrode sheet ES. More specifically, a color C1 represents the coated lane, a color C2 represents the insulation layers on the coated lane (i.e., an overlapping region between the insulation layers and the coated lane), a color C3 represents the insulation layers on the uncoated parts, and a color C4 represents the uncoated parts.

The fourth region R4 may include tabs T1 and T2. In the fourth region R4, the tab T1 or the tab T2 may be selected. The fifth region R5 includes the first to fourth scenes S1, S2, S3 and S4 when the tab T1 is selected, and includes the fifth to eighth scenes S5, S6, S7 and S8 when the tab T1 is selected.

The first scene S1 may display the coordinate-related measurement data CMD of the electrode sheet ES, the second scene S2 may display coordinate-related inspection data CID indicating a mismatch, and the third and fourth scenes S3 and S4 may display coordinate-related inspection data CID indicating widths of the coated lanes and the uncoated parts of the electrode sheet ES.

More specifically, the first scene S1 may display the coordinate-related measurement data CMD of the electrode sheet ES in a graph form. The coordinate-related measurement data CMD may be collected by scanning the electrode sheet ES in the transverse direction, and the electrode sheet ES may be moved in the machine direction during the scanning of the electrode sheet ES. Accordingly, the coordinate-related measurement data CMD may be collected in units of a length corresponding to one scanning of the electrode sheet ES.

The second scene S2 may display the coordinate-related inspection data CID indicating the mismatch in a graph form. When one coated lane is formed on each of the top and bottom surfaces of the electrode sheet ES, the picture SCR and the fifth region R5 may not include a menu and a tab for selecting the mismatch because the mismatch is a single measured value.

The third scene S3 may display the coordinate-related inspection data CID indicating the widths of the coated lanes and the uncoated parts of the electrode sheet ES in a table form and thus the third scene S3 may include a plurality of columns. For example, the third scene S3 may include three columns corresponding to the coated lane and the uncoated parts on the top surface of the electrode sheet ES and three columns corresponding to the coated lane and the uncoated parts of the bottom surface of the electrode sheet ES.

The fourth scene S4 may display the coordinate-related inspection data CID indicating the widths of the coated lanes and the uncoated parts of the electrode sheet ES in a graph form. A width selected from among the widths of the coated lanes and the uncoated parts of the electrode sheet ES in the third scene S3 may be displayed in the fourth scene S4.

The coordinate-related measurement data CMD is based on measurement performed by scanning and thus a unit in which the coordinate-related inspection data CID displayed by the second to eighth scenes S2, S3, S4, S5, S6, S7, and S8 is collected may be different from a unit in which the coordinate-related measurement data CMD is collected.

The coordinate-related inspection data CID displayed in the second, third and fourth scenes S2, S3 and S4, and the fifth to eighth scenes S5, S6, S7, and S8, which will be described below, may correspond to the same part of the electrode sheet ES as the coordinate-related measurement data CMD of the first scene S1. That is, the coordinate-related inspection data CID and the coordinate-related measurement data CMD displayed simultaneously in the first to eighth scenes S1, S2, S3, S4, S5, S6, S7, and S8 may be collected from the same part of the electrode sheet ES.

For example, when the coordinate-related measurement data CMD is collected from a part of the electrode sheet ES that is 10 m long and the coordinate-related inspection data CID is collected from a part of the electrode sheet ES that is 1 m long, ten data points of the coordinate-related inspection data CID may be displayed in the picture SCR on the client device 300 along with the coordinate-related measurement data CMD.

The fifth and sixth scenes S5 and S6 display coordinate-related inspection data CID indicating widths of insulation overlays, and the seventh and eighth scenes S7 and S8 display coordinate-related inspection data CID indicating insulation widths.

More specifically, the fifth scene S5 may display the coordinate-related inspection data CID indicating the widths of the insulation overlays in the form of table and thus may include a plurality of columns. For example, the fifth scene S5 may include four columns corresponding to widths of insulation overlays on the top surface of the electrode sheet ES, and four columns corresponding to widths of insulation overlays on the bottom surface of the electrode sheet ES.

The sixth scene S6 may display the coordinate-related inspection data CID indicating the widths of the insulation overlays on the electrode sheet ES in the form of graph. A width selected from among the widths of the coated lanes and the uncoated parts of the electrode sheet ES in the fifth scene S5 may be displayed in the sixth scene S6.

The seventh scene S7 may display the coordinate-related inspection data CID indicating the insulation widths in the form of table and thus may include a plurality of columns. For example, the seventh scene S7 may include two columns corresponding to insulation widths of the top surface of the electrode sheet ES, and two columns corresponding to insulation widths of the bottom surface of the electrode sheet ES.

The eighth scene S8 may display the coordinate-related inspection data CID indicating the insulation widths of the electrode sheet ES in the form of graph. A width selected from among the widths of the coated lanes and the uncoated parts of the electrode sheet ES in the seventh scene S7 may be displayed in the eighth scene S8.

### (Third Embodiment)

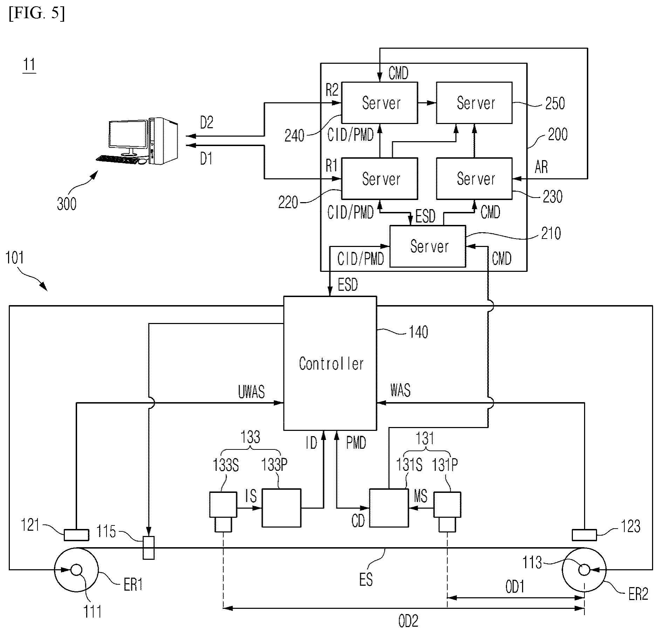

FIG. 5 illustrates a secondary battery manufacturing system 101 according to example embodiments.

Referring to FIG. 5, a roll map generating system 101 may include a secondary battery manufacturing apparatus 101, a roll map generator 200, and a client device 300.

The roll map generator 200 and the client device 300 are substantially the same as those described above with reference to FIGS. 1 to 3 and thus a redundant descriptions thereof is omitted here.

The secondary battery manufacturing apparatus 101 may include an unwinder 111, a rewinder 113, a processing apparatus 115, a first rotary encoder 121, a second rotary encoder 123, a measuring device 131, an inspector 133, and a controller 140.

The controller 140 may be configured to perform the functions of the first controller 141 and the second controller 143 of FIG. 1. Accordingly, the controller 140 may be configured to generate coordinate data CD based on an unwinding amount signal UWAS or a winding amount signal WAS, transmit the coordinate data CD to a processor 131P of the measuring device 131, receive coordinate-related measurement data CMD and compressed measurement data PMD from the processor 131P, and transmit the coordinate-related measurement data CMD and the compressed measurement data PMD to a first server 220 through a server 210. The controller 140 may be configured to generate a signal for controlling the unwinder 111, the rewinder 113, and the processing apparatus 115.

### (Fourth Embodiment)

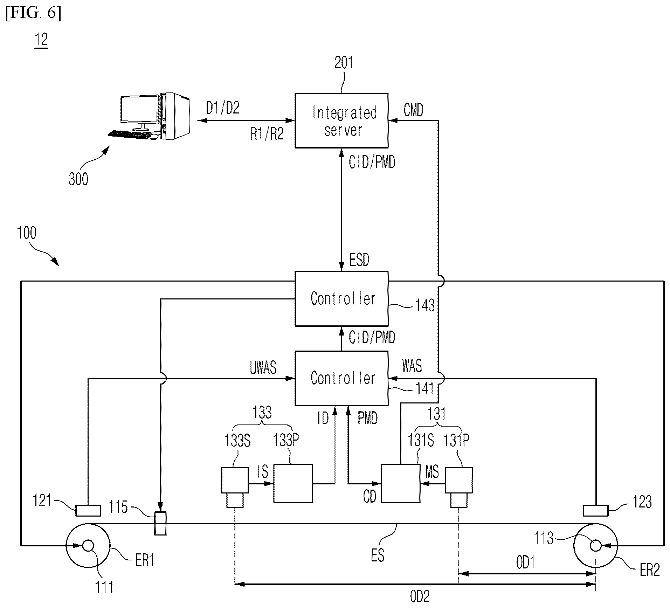

FIG. 6 illustrates a roll map generating system 102 according to example embodiments.

Referring to FIG. 6, the roll map generating system 102 may include a secondary battery manufacturing apparatus 100, a server 201, and a client device 300.

The secondary battery manufacturing apparatus 100 and the client device 300 are substantially the same as those described above with reference to FIGS. 1 to 3 and thus a redundant descriptions thereof is omitted here.

The server 201 may be configured to perform the functions of the servers 210, 220, 230, 240, and 250 of FIG. 1. Accordingly, the server 210 may be configured to receive coordinate-related measurement data CMD and compressed measurement data PMD and generate a roll map and an intermediate roll map.

Accordingly, the server 201 may be configured to retrieve coordinate-related inspection data CID and the coordinate-related measurement data CMD stored in the server 201 based on a search parameter transmitted from the client device 300, and transmit a URL (or schema) for displaying the coordinate-related inspection data CID and the coordinate-related measurement data CMD to the client device 300.

The present invention has been described above in more detail with reference to the drawings, the embodiments, etc. However, the configurations illustrated in the drawings or embodiments described in the present specification are only embodiments of the present invention and do not reflect all the technical ideas of the present invention and thus it should be understood that various equivalents and modifications that replace the configurations would have been made at the filing date of the present application.

## Claims

1. A method of displaying an intermediate roll map, comprising:
transmitting an application programming interface (API) call to a server storing coordinate-related measurement data, wherein the coordinate-related measurement data includes measurement data collected based on measurement of an electrode sheet and coordinates related to the measurement data;
transmitting the coordinate-related measurement data in response to the API call; and
displaying the coordinate-related measurement data.

2. The method of claim 1, wherein the coordinate-related measurement data is displayed in the form of graph.

3. The method of claim 1, wherein the coordinate-related measurement data is transmitted in a JSON format.

4. The method of claim 1, wherein the coordinate-related measurement data indicates a loading of an electrode slurry on the electrode sheet.

5. The method of claim 1, wherein the coordinate-related measurement data indicates a thickness of an electrode slurry on the electrode sheet.

6. The method of claim 1, wherein the coordinate-related measurement data is partially visualized, and
the coordinate-related measurement data is displayed together with a scroll for selecting a part of the coordinate-related measurement data which is visualized.

7. A method of displaying an intermediate roll map, comprising displaying coordinate-related inspection data generated based on inspection of an electrode sheet and coordinate-related measurement data generated based on measurement of the electrode sheet,
wherein the coordinate-related inspection data is displayed in the form of table.

8. The method of claim 7, wherein the coordinate-related inspection data is further displayed in the form of graph.

9. The method of claim 8, wherein the table includes a plurality of columns, and
a part of the coordinate-related inspection data displayed in the form of graph is determined by selecting the plurality of columns.

10. The method of claim 7, wherein the coordinate-related inspection data indicates a mismatch between a top coated lane on a top surface of the electrode sheet and a bottom coated lane on a bottom surface of the electrode sheet opposite to the top surface.

11. The method of claim 7, wherein the coordinate-related inspection data indicates widths of coated lanes and uncoated parts of the electrode sheet.

12. The method of claim 7, wherein the coordinate-related inspection data indicates a width of an overlay between a coated lane and an insulating layer on the electrode sheet.

13. The method of claim 7, wherein the coordinate-related inspection data indicates a width of an insulation layer on the electrode sheet.
